(19) Europäisches Patentamt
European Patent Office
Office européen des brevets

(11) **EP 4 033 218 B1**

(12) **EUROPÄISCHE PATENTSCHRIFT**

(45) Veröffentlichungstag und Bekanntmachung des Hinweises auf die Patenterteilung:
**03.04.2024 Patentblatt 2024/14**

(21) Anmeldenummer: **21152772.6**

(22) Anmeldetag: **21.01.2021**

(51) Internationale Patentklassifikation (IPC):
**G01M 13/045** (2019.01)    **G01H 1/00** (2006.01)
**G01M 13/028** (2019.01)

(52) Gemeinsame Patentklassifikation (CPC):
**G01H 1/00; G01M 7/00; G01M 13/005**

(54) **VERFAHREN UND VORRICHTUNG ZUM ÜBERWACHEN DES BETRIEBS EINES TECHNISCHEN OBJEKTS**

METHOD AND DEVICE FOR MONITORING THE OPERATION OF A TECHNICAL OBJECT

PROCÉDÉ ET DISPOSITIF DE SURVEILLANCE DU FONCTIONNEMENT D'UN OBJET TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.07.2022 Patentblatt 2022/30**

(73) Patentinhaber: **Siemens Aktiengesellschaft**
**80333 München (DE)**

(72) Erfinder:
• **Bierweiler, Thomas**
  **76131 Karlsruhe (DE)**
• **Kemnitz, Jana**
  **1140 Wien (AT)**
• **Khazankin, Roman**
  **1220 Wien (AT)**
• **Schall, Daniel**
  **2020 Hollabrunn (AT)**
• **von Dosky, Stefan**
  **76149 Karlsruhe (DE)**

(74) Vertreter: **Siemens Patent Attorneys**
**Postfach 22 16 34**
**80506 München (DE)**

(56) Entgegenhaltungen:
DE-A1-102009 045 493      DE-A1-102015 115 282
US-A1- 2009 056 456      US-A1- 2020 272 139

**Beschreibung**

Die Erfindung betrifft ein Verfahren zum Überwachen des Betriebs eines technischen Objekts mithilfe eines mathematischen Modells auf Basis maschinellen Lernens nach der Montage eines dreiachsigen Ersatz-Beschleunigungssensors, wobei zunächst ein dreiachsiger erster Beschleunigungssensor auf dem Objekt an einer Position montiert ist, und das Objekt im Betrieb mechanische Schwingungen erzeugt, und folgende Schritte ausgeführt werden:

a) Ermitteln einer ersten Orientierung des ersten Beschleunigungssensors am Objekt in Form eines Lagevektors relativ zur Gravitationskraft,
b) Erzeugen und Trainieren des mathematischen Modells zur Überwachung des Objekts bezüglich des Lagevektors,
c) Demontage des ersten Beschleunigungssensors und Montage des dreiachsigen Ersatz-Beschleunigungssensors mit einer neuen Orientierung am Objekt an derselben Position, an jener der erste Beschleunigungssensors montiert war.

Ferner betrifft die Erfindung eine Vorrichtung zum Betrieb eines technischen Objekts, umfassend eine Rechenvorrichtung mit einem Speicher, sowie verbundene Erfassungsmittel zur Erfassung von Sensorwerten in Form eines dreiachsigen Beschleunigungssensors, wobei die Rechenvorrichtung dazu eingerichtet ist, ein mathematisches Modell auf Basis maschinellen Lernens zu erzeugen, zu trainieren und zu speichern, und auf dem Objekt der dreiachsige Beschleunigungssensor an einer Position montiert ist, und das Objekt im Betrieb mechanische Schwingungen erzeugt.

Außerdem betrifft die Erfindung ein Computerprogramm, einen elektronisch lesbaren Datenträger und ein Datenträgersignal.

Systeme zur Überwachung von technischen Objekten, wie Geräte, Motoren, Pumpen, Maschinen und Anlagen können beispielsweise deren mechanischen Bewegungen erfassen, um daraus Betriebsstunden abzuleiten oder Betriebseigenschaften zu ermitteln, Fehlerzustände zu erkennen oder zu prognostizieren, oder auch Wartungsintervalle oder Reparaturen festzulegen, um eine gute Verfügbarkeit des technischen Objekts sicherzustellen. Bekannte Systeme zur Auswertung von Schwingungen, wie beispielsweise CMS X-Tools, können beispielsweise Überrollfrequenzen von Gleitringen durch die Auswertung einzelner Schwingungs-Frequenzbänder oder einem RMS-Wert, beispielsweise nach DIN ISO 10816, erfassen und auswerten.

Ferner können datengetriebene KI-Methoden auch vorher unbekannte Abweichungen erkennen oder neuartige Fehlerklassen bilden. Als relevanter Stand der Technik werden folgende Dokumente genannt: US 2009/056456, US 2020/272139, DE 10 2015 115282, DE 10 2009 045493.

Der Nachteil solcher Systeme ist jedoch, dass beispielsweise bei einem Sensorwechsel, hervorgerufen durch einen Defekt, eine Wartung oder einen Batteriewechsel, ein erneutes aufwändiges Trainieren eines Modells auf Basis künstlicher Intelligenz erforderlich ist, falls das Modell auf den Sensor angepasst ist.

Der Sensor kann jedoch durch die Neu-Montage verdreht oder verbogen montiert sein, was zu einer unerwünschten Veränderung der Orientierung gegenüber der ursprünglichen Orientierung des vorhergehend montierten Sensors führt. Dabei können die erfassten Messwerte so ungenau werden, dass eine weitere Verwendung des Modells stark eingeschränkt sein kann.

Es ist Aufgabe der Erfindung ein Verfahren bereitzustellen, durch welches die weitere Verwendung eines mathematischen Modells für den Betrieb des technischen Objekts in Zusammenhang mit einem Beschleunigungs-Sensor vereinfacht wird.

Die Aufgabe wird durch ein Verfahren eingangs genannter Art gelöst, wobei folgende zusätzliche Schritte ausgeführt werden:

d) Erfassen von Beschleunigungswerten in x-, y- und z-Richtung mithilfe jeweiliger Einzelsensoren des dreiachsigen Ersatz-Beschleunigungssensors des Objekts,
e) Berechnen jeweiliger Indikatorwerte aus dem zeitlichen Verlauf der erfassten Beschleunigungswerte des Ersatz-Beschleunigungssensors,
f) Bestimmen eines Ersatz-Vektors aus den Indikatorwerten und Bestimmen eines Differenzvektors zwischen dem Ersatz-Vektor und dem in Schritt b) ermittelten Lagevektor des ersten Beschleunigungssensors,
g) Überwachen des Betriebs durch Anwenden des Modells beim Betrieb des Objekts für den Lagevektor in der Orientierung des Ersatz-Vektors unter Berücksichtigung des Differenzvektors.

Durch die Erfindung wird erreicht, dass ein bestehendes oder erzeugtes Modell auf Basis künstlicher Intelligenz weiterverwendet werden kann, selbst wenn ein entsprechender, am Objekt montierter Beschleunigungssensor erneut montiert wird.

Dadurch kann auf ein erneutes Trainieren des Modells mit dem neu-montierten Sensor verzichtet werden.

Der Betrieb des technischen Objekts ist der Betriebszustand, in welchem mechanische Schwingungen erzeugt werden, die durch die Beschleunigungssensoren S1 und ES erfasst werden.

Die genannten Indikatorwerte beziehen sich jeweils auf eine Messgröße des dreiachsigen Beschleunigungssensors. Mit anderen Worten liegt für jede Achse des dreiachsigen Beschleunigungssensors ein gesonderter Indikatorwert vor, mit welchem eine Beschleunigung in die zugehörige Achse erfasst werden kann.

Es ist klar, dass je nach Anordnung des Ersatz-Beschleunigungssensors bezüglich der Gravitationsrichtung unterschiedliche Genauigkeiten hinsichtlich des Differenzvektors erreicht werden können. Eine Abweichung gegenüber einer Montage in Richtung der Gravitationsrichtung kann möglicherweise ungenauer erkannt werden als eine Abweichung quer zur Gravitationsrichtung.

Es ist auch klar, dass das Erzeugen und Trainieren eines mathematischen Modells für den Betrieb des Objekts das Erfassen von Beschleunigungswerten in x-, y- und z-Richtung mithilfe jeweiliger Einzelsensoren eines dreiachsigen Beschleunigungssensors bezüglich des Objekts miteinschließt.

Die neue Orientierung des Ersatz-Beschleunigungssensors am Objekt bezieht sich auf die ursprüngliche Orientierung des ersten Beschleunigungssensors, wobei die Position zwischen dem erste Beschleunigungssensor und dem Ersatz-Beschleunigungssensor die gleiche ist.

In einer Weiterbildung der Erfindung ist es vorgesehen, dass der Indikatorwert mithilfe eines Mittelwerts über eine zeitliche Abfolge der Beschleunigungswerte bestimmt wird.

Dadurch wird erreicht, dass der Indikatorwert auf eine besonders einfache Weise bestimmt werden kann.

In einer Weiterbildung der Erfindung ist es vorgesehen, dass der Indikatorwert mithilfe eines Gleichanteils einer FFT-Transformation über eine zeitliche Abfolge der Beschleunigungswerte bestimmt wird.

Dadurch wird erreicht, dass der Indikatorwert auf eine besonders einfache Weise bestimmt werden kann.

In einer Weiterbildung der Erfindung ist es vorgesehen, dass bei Überschreiten eines vorbestimmten Grenzwerts für den im Schritt f) bestimmten Differenzvektor eine Korrektur des Lagevektors mithilfe des im Schritt f) bestimmten Differenzvektors durchgeführt wird.

Dadurch kann auf eine einfache Weise erkannt werden, ob ein Sensor getauscht wurde, oder auch ob sich ein Sensor während des Betriebs unerwünscht gelöst hat, beispielsweise bei einem Bruch der entsprechenden Halterung des Sensors, und eine automatische Anpassung durch den Differenzvektor erfolgen kann.

In einer Weiterbildung der Erfindung ist es vorgesehen, dass bei Überschreiten eines vorbestimmten Grenzwerts für den der im Schritt f) bestimmten Differenzvektor ein Sensorwechsel vom ersten Beschleunigungssensor zum Ersatz-Beschleunigungssensor erkannt wird.

Dadurch kann auf eine einfache Weise erkannt werden, ob ein Sensor getauscht wurde, oder auch ob sich ein Sensor während des Betriebs unerwünscht gelöst hat, beispielsweise bei einem Bruch der entsprechenden Halterung des Sensors.

Beim Tausch eines Sensors kann es erforderlich sein, dass eine Authentifizierung des Beschleunigungssensors und eine Zuordnung zum technischen Objekt durchgeführt wird, um beispielsweise zwischen einem unerwünschten Bruch aus der Halterung oder einem Lösen der Halterung zuverlässig unterscheiden zu können und dies entsprechend dokumentieren zu können. Daher ist eine automatische Erkennung eines Sensortausches nicht immer notwendig.

In einer Weiterbildung der Erfindung ist es vorgesehen, dass der euklidische Abstand für den im Schritt f) bestimmten Differenzvektor über zumindest einen Zeitpunkt gebildet wird, und eine Betriebszustandsanalyse des Objekts durch Anwendung des mathematischen Modells und des euklidischen Abstands des Differenzvektors durchgeführt wird.

Dadurch kann auf einfache Weise das Modell des technischen Objekts verbessert werden, indem der Differenzvektor als Parameter im Modell berücksichtigt wird.

In einer Weiterbildung der Erfindung ist es vorgesehen, dass der Differenzvektor über einen zeitlichen Verlauf wiederholt bestimmt wird und vorzugweise ein Mittelwert über den zeitlichen Verlauf des Differenzvektors berechnet wird.

Dadurch kann auf einfache Weise beispielswiese eine langsame Veränderung des Sensors, wie beispielsweise durch eine Sensor-Drift, erfasst werden und beispielsweise eine Sensor-Wartung eingeleitet werden.

In einer Weiterbildung der Erfindung ist es vorgesehen, dass ein mathematisches Modell auf Basis von maschinellem Lernen für das Objekt mithilfe des im Schritt f) bestimmten Differenzvektors erzeugt, trainiert und angewendet wird, und der Betrieb des Objekts mithilfe des Modells überwacht wird.

Dadurch kann erreicht werden, dass das mathematische Modell für das technische Objekt zusätzlich eine Sensor-spezifische Information einschließt und daher die Aussage des Modells weitreichender sein kann.

In einer Weiterbildung der Erfindung ist es vorgesehen, dass das mathematische Modell mithilfe des zeitlichen Verlaufs des Differenzvektors erzeugt, trainiert und angewendet wird.

Dadurch kann erreicht werden, dass das mathematische Modell für das technische Objekt zusätzlich eine dynamische, zeitabhängige Sensor-spezifische Information einschließt und daher die Aussage des Modells weitreichender sein kann.

In einer Weiterbildung der Erfindung ist es vorgesehen, dass der erste Beschleunigungssensor und der Ersatz-Beschleunigungssensor baugleich sind.

Unter "baugleich" wird verstanden, dass die Sensoren untereinander austauschbar sind und beispielsweise kompatible Sensordaten erzeugen können und gleiche Positionen der integrierten Einzelsensoren bezüglich des Montageorts aufweisen. Dadurch kann das mathematische Modell einfacher ausgeführt werden und das Verfahren insgesamt vereinfacht werden.

In einer Weiterbildung der Erfindung ist es vorgesehen, dass sich das Objekt während Schritt d) im Betrieb befindet. Dadurch kann erreicht werden, dass eine Ausfallzeit bei der Wartung des technischen Objekts und des Sensors reduziert werden kann, da eine Ermittlung des Differenzvektor auch bei laufendem Betrieb des technischen Objekts erfolgen kann.

Die Aufgabe der Erfindung wird auch durch ein Computerprogramm gelöst, umfassend Befehle, welche bei deren Ausführung durch einen Computer diesen veranlassen, das erfindungsgemäße Verfahren, genauer gesagt die Schritte d) bis g), auszuführen.

Die Aufgabe der Erfindung wird auch durch einen elektronisch lesbarer Datenträger mit darauf gespeicherten lesbaren Steuerinformationen gelöst, welche zumindest ein erfindungsgemä-βes Computerprogramm umfassen und derart ausgestaltet sind, dass sie bei Verwendung des Datenträgers in einer Recheneinrichtung das erfindungsgemäße Verfahren, genauer gesagt Schritte d)-g), durchführen.

Die Aufgabe der Erfindung wird auch durch eine Vorrichtung eingangs genannter Art gelöst, wobei die Rechenvorrichtung dazu eingerichtet ist, mithilfe durch das Erfassungsmittel erfasster Sensorwerte das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:

Fig. 1 ein Ausführungsbeispiel einer erfindungsgemäßen Vorrichtung mit einer Darstellung eines technischen Objekts und einem montierten dreiachsigen Beschleunigungssensor,

Fig. 2 eine Detailansicht des Beschleunigungssensors nach Fig. 1 mit einer geänderten Orientierung,

Fig. 3 ein Ausführungsbeispiel für ein Flussdiagramm des erfindungsgemäßen Verfahrens,

Fig. 4 ein Beispiel für ein zeitliche Darstellung eines Sensorsignals nach Sensor-Neumontage ohne Neuausrichtung des Koordinatensystems,

Fig. 5 eine Darstellung einer Veränderung der Sensor-Orientierung um die z-Achse nach Sensor-Neumontage,

Fig. 6 ein Beispiel für eine zeitliche Darstellung eines Sensorsignals nach Sensor-Neumontage nach Neuausrichtung des Koordinatensystems.

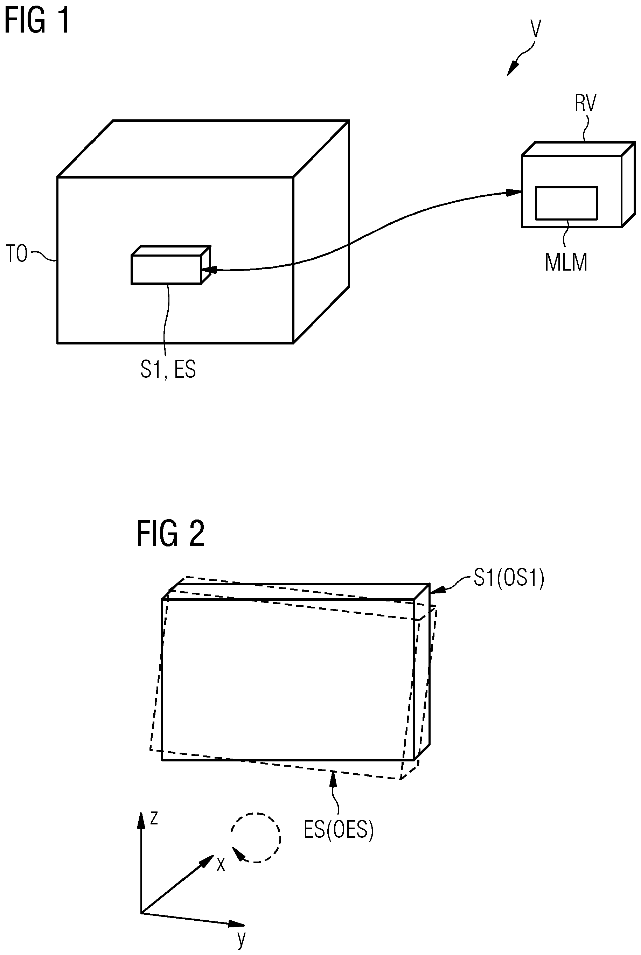

**Fig. 1** zeigt ein Ausführungsbeispiel einer erfindungsgemäßen Vorrichtung V mit einer Darstellung eines technischen Objekts und einem montierten dreiachsigen Beschleunigungssensor.

Das technische Objekt TO kann beispielsweise ein Motor, eine Pumpe, eine Bearbeitungsmaschine oder ähnliches sein.

Auf dem technischen Objekt TO ist ein dreiachsiger Beschleunigungssensor S1 befestigt.

Der dreiachsige Beschleunigungssensor S1 wird dazu verwendet, mechanische Vibrationen oder Bewegungen des technischen Objekts TO zu überwachen, um beispielsweise daraus eine Betriebsdauer zu ermitteln.

Eine Rechenvorrichtung RV mit einem Speicher weist ferner Mittel auf, um Sensordaten des Sensors S1 zu erfassen.

Außerdem liegt in der Rechenvorrichtung RV ein mathematisches Modell MLM auf Basis von künstlicher Intelligenz, das heißt maschinellem Lernen (engl. "machine learning", kurz "ML"), des technischen Objekt TO vor, wobei das ML-Modell das Objekt TO in dessen Betrieb beschreibt.

**Fig. 2** zeigt eine Detailansicht des vorher gezeigten Beschleunigungssensors mit geänderter Orientierung, das heißt einer Rotation und keiner oder zumindest sehr geringen Translation im Vergleich zur Baugröße des Beschleunigungssensors beziehungsweise der einzelnen integrierten Sensoren in der jeweiligen Achsrichtung.

Die geänderte Orientierung liegt meist um einen gedachten, jedoch nicht in der Figur eingezeichneten Drehpunkt.

Dies kann beispielsweise dann vorkommen, wenn der Sensor S1 zur Wartung oder Reparatur des technischen Objekts TO oder des Sensors S1 selbst demontiert und erneut montiert wird.

Die Montage kann beispielsweise mittels Schrauben, Halterungen oder Kleben erfolgen.

Es ist beispielsweise auch eine Befestigung mittels Klettband zum Aufkleben möglich, umfassend ein Haft- und ein Flauschteil. Es ist dabei günstig, wenn auf eine Einhaltung der Position gesorgt werden kann, beispielsweise durch eine entsprechende Markierung oder einen Montagerahmen.

Auch ein Batterietausch oder eine abgebrochene Halterung kann eine erneute Montage des Sensors S1 erfordern.

In der Figur ist durch eine Rotation um die x-Achse angedeutet, dass nach einer ersten Montage des Sensors S1 mit einer Orientierung OS1 eine geänderte Orientierung OES eines Ersatz-Sensors ES vorliegen kann.

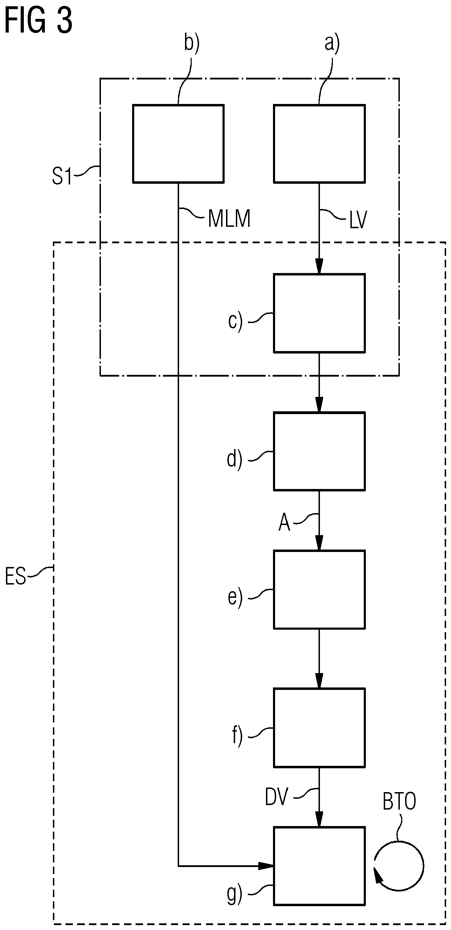

In **Fig. 3** ist ein Ausführungsbeispiel für ein Flussdiagramm des erfindungsgemäßen Verfahrens dargestellt.

Das Verfahren dient zum Überwachen des Betriebs eines technischen Objekts TO, wie beispielsweise einem Motor, mithilfe eines mathematischen Modells MLM auf Basis maschinellen Lernens.

Zunächst ist ein dreiachsiger erster Beschleunigungssensor S1, beispielsweise auf MEMS-Basis, auf dem Objekt TO an einer Position montiert.

Das technische Objekt TO erzeugt im Betrieb mechanische Schwingungen oder Vibrationen, welche durch das ML-Modell MLM in Betriebseigenschaften oder Betriebszustände abgebildet werden können.

Das Erzeugen und Trainieren des ML-Modells MLM für den Betrieb des Objekts kann mittels des Erfassens von Beschleunigungswerten in x-, y- und z-Richtung mithilfe jeweiliger Einzelsensoren eines dreiachsigen Beschleunigungssensors bezüglich des Objekts erfolgen.

Folgende Schritte werden nun ausgeführt:

a) Ermitteln einer ersten Orientierung OS1 des ersten Beschleunigungssensors am Objekt TO in Form eines Lagevektors LV relativ zur Gravitationskraft,

b) Erzeugen und Trainieren des mathematischen Modells MLM für die Überwachung des Objekts TO bezüglich des Lagevektors LV,

c) Demontage des ersten Beschleunigungssensors S1 und Montage des dreiachsigen Ersatz-Beschleunigungssensors ES mit einer neuen Orientierung OES am Objekt TO an derselben Position, an jener der erste Beschleunigungssensors S1 montiert war.

d) Erfassen von Beschleunigungswerten A in x-, y- und z-Richtung mithilfe jeweiliger Einzelsensoren des dreiachsigen Ersatz-Beschleunigungssensors ES des Objekts TO,

e) Berechnen jeweiliger Indikatorwerte aus dem zeitlichen Verlauf der erfassten Beschleunigungswerte A des Ersatz-Beschleunigungssensors ES,

f) Bestimmen eines Ersatz-Vektors aus den Indikatorwerten und Bestimmen eines Differenzvektors DV zwischen dem Ersatz-Vektor und dem in Schritt b) ermittelten Lagevektor LV des ersten Beschleunigungssensors S1,

g) Überwachen des Betriebs des Objekts durch Anwenden des Modells MLM beim Betrieb BTO des Objekts TC für den Lagevektor LV in der Orientierung des Ersatz-Vektors unter Berücksichtigung des Differenzvektors DV.

Für das Verfahren ist es besonders vorteilhaft, wenn das Gravitationsfeld der Erde im Mittel über einen längeren Zeitraum, wie zum Beispiel 1 Stunde oder 1 Tag, gemessen wird. Schwingungssensoren werden in der Regel an einem Gewinde befestigt.

Nach der Erstmontage kann über einen längeren Zeitraum gemittelt werden, wie zum Beispiel 1 Stunde oder 1 Tag, und die Ausrichtung der x-, y- und z-Achse erfasst werden.

Für den Sensor SITRANS MS200 ist die y-Achse identisch mit der Gewinderichtung, das heißt der SITRANS MS200 wird während der Montage um die y-Achse festgedreht.

Nach der Erstmontage kann ein System zur Anomalie-Erkennung für das technische Objekt TO auf Basis künstlicher Intelligenz eingelernt werden oder Zustände ermittelt werden.

Nach der Erstmontage des Sensors S1 können folgende Eigendiagnose-Funktionen genutzt werden:

• Erkennung einer "Verbiegung" (Abweichung der y-Achse):
  Für alle Montagerichtungen kann die Abweichung der y-

Achse durch Mittelung über einen geeignet langen Zeitbereich, wie zum Beispiel 1 Stunde oder 1 Tag, erkannt werden. Ein Fehler tritt beispielsweise dann auf, wenn der Sensor abfällt, die Halterung verbogen oder der Sensor demontiert wird. Auch ein Verkippen, Umfallen oder Abfallen des zu überwachenden technischen Objekts TO kann zu einer Abweichung der y-Achse führen.

• Erkennung einer Verdrehung um die y-Achse: Sofern die y-Achse nicht parallel zum Gravitationsfeld ausgerichtet ist (vertikale Montage des Sensors), kann mit einer geeignet langen Mittelung eine Verdrehung um die y-Achse erkannt werden. Ein Fehler tritt beispielsweise dann auf, wenn der Sensor abfällt, die Befestigung locker ist oder der Sensor demontiert wird. Auch ein Verkippen, Umfallen oder Abfallen des zu überwachenden technischen Objekts TO kann zu einer Verdrehung führen.

• Ein Sensor-Fehler des dreiachsigen Sensors S1 lässt sich dadurch erkennen, dass die Summe der Beschleunigungsmesswerte im Mittel nicht dem Gravitationsfeld entspricht. Dabei wird z.B. jede Beschleunigungsrichtung gemittelt.

$$x_{mean} = \frac{1}{N}\sum x, \quad y_{mean} = \frac{1}{N}\sum y, \quad z_{mean} = \frac{1}{N}\sum z$$

Wobei N die Anzahl der Messwerte darstellt. Als Toleranz können beispielsweise 10 % der Gravitation zugelassen werden. Ein Mittelwert R sollte $0,9G < R < 1,1G$ sein, wobei :

$$R = \sqrt{x_{mean}^2 + y_{mean}^2 + z_{mean}^2}$$

- Falls der Beschleunigungssensor S1 in Sättigung geht, das heißt ein Ende des Messbereichs erreicht wird, so kann dies durch die Ermittlung der maximalen bzw. minimalen Beschleunigung über einen längeren Zeitbereich (z.B. 1 Tag) erkannt werden. Entspricht der maximale beziehungsweise minimale Messwert dem maximal beziehungsweise minimal möglichem Messwert, so liegt für den Sensor eine Sättigung vor. Die Empfindlichkeit des Beschleunigungssensors kann optional angepasst werden.

Natürlich sind diese Funktionen auch für den Ersatz-Beschleunigungssensor ES anwendbar.

Nach der erneuten Montage des technischen Objekts TO kann die korrekte Montage überprüft werden, indem die gemittelte Beschleunigung in y-Richtung bewertet wird. Die gemittelte Beschleunigung in y-Richtung nach der erneuten Montage muss dem gemittelten Wert der Beschleunigung der y-Richtung nach der Erstmontage entsprechen. Eine Abweichung der y-Richtung (Inklination) gegenüber der Horizontalen, das heißt eine Verdrehung nach oben oder nach unten, kann durch Drehung in Kugelkoordinaten ausgeglichen werden. Der Schwingungsmesswert y wird nach y' abgebildet. Eine horizontale Verdrehung kann nicht mithilfe des Gravitationsfelds festgestellt werden. Die Ermittlung der horizontalen Verdrehung mit Hilfe eines Abgleichs aus den Mittelwerten bei der Erstmontage kann zu fehleranfällig sein, da der Betriebszustand der Anlage und damit des Objekts TO unbekannt ist und der Abnutzungsvorrat des Objekts TO ebenfalls unbekannt ist. Sowohl der Betriebszustand als auch der Zustand des Objekts TO können die vorhandenen Schwingungen stark beeinflussen.

Sofern die Montage korrekt erfolgte, so kann im nächsten Schritt die Drehung um die y-Achse korrigiert werden (Einschränkung bei vertikaler Montage). Nach der erneuten Montage kann die Drehrichtung aus den gemittelten Messwerten der x-und z-Richtung (oder wahlweise aus dem Gleichanteil einer Fouriertransformation) bestimmt werden:

$$\varphi_n = atan2(z_{mean}, x_{mean})$$

Die aktuelle Drehrichtung kann mit der Drehrichtung der Erstmontage von Sensor S1 verglichen werden und ab dem Zeitpunkt der Neumontage für alle Schwingungsmesswerte in Zylinderkoordinaten (Polarkoordinaten) korrigiert werden. Die Richtung des Zylinders entspricht dabei der Richtung der Montageachse (y-Achse). Der Korrekturwinkel $\Delta\varphi$ kann berechnet werden durch:

$$\Delta\varphi = \varphi_n - \varphi_1$$

Die Transformation lautet (inverse Transformation):

$$x' = x \cdot cos(\Delta\varphi) - z \cdot sin(\Delta\varphi)$$

$$z' = x \cdot sin(\Delta\varphi) + z \cdot cos(\Delta\varphi)$$

Falls der Sensor vertikal montiert ist, so ist die Bestimmung der Drehrichtung $\varphi_n$ mit Hilfe des Gravitationsfelds nicht möglich. Die Drehrichtung kann nun über einen Vergleich mit den Schwingungsanteilen nach der Erstmontage erfolgen. Wie oben ausgeführt kann dieses Verfahren jedoch fehleranfällig sein, da eine Abhängigkeit vom Betriebszustand des Objekts TO und vom Verschleiß des Objekts TO vorhanden sein kann.

Robuster kann beispielsweise eine Anomalie-Erkennung die x-und z-Richtung zusammenzufassen mit

$$xz = \sqrt{x^2 + y^2}$$

und gemeinsam bewerten.

Alle weiteren erneuten Montage können ebenfalls mit der Erstmontage verglichen werden, die Drehung wird entsprechend ermittelt und korrigiert.

Alle erfassten Schwingungsmesswerte werden in diesem Beispiel entsprechend der ermittelten Transformation gedreht. Für die weitere Verarbeitung, wie durch ein System zur Anomalie-Erkennung, können die transformierten Werte x', z' und y' genutzt werden.

Die Korrektur der Montagerichtung bietet als weiteren Vorteil, dass für das Einlernen einer datengetriebenen Anomalie-Erkennung Zeiträume vor und nach einer erneuten Montage genutzt werden können. Dies ist insbesondere dann vorteilhaft, wenn sich Betriebszustände in den verschiedenen Jahreszeiten unterscheiden und eingelernt werden müssen.

Alternativ zur Drehung der Beschleunigungswerte nach einer erneuten Montage bezüglich des Koordinatensystems vor der Montage kann auch von Beginn weg im Ortskoordinatensystem gerechnet werden.

Hierfür kann dann nach der Erst-Installation und weiteren Installationen die Ausrichtung des Ersatz-Beschleunigungssensors ES über eine ausreichende Mittelung bestimmt werden und in das Ortskoordinatensystem umgerechnet werden.

Der Betrieb BTO des Objekts TO ist der Betriebszustand, in welchem mechanische Schwingungen erzeugt werden, die durch die Beschleunigungssensoren S1 und ES erfasst werden.

Die Schritte a) und b) können unabhängig voneinander und in beliebiger Reihenfolge erfolgen.

Der Schritt a) kann während oder außerhalb des Betriebs des technischen Objekts TO erfolgen, während für den Schritt b) ein Betrieb des technischen Objekts TO erforderlich ist, da der Betrieb durch das ML-Modell MLM nachgebildet werden soll.

Der Indikatorwert kann beispielsweise mithilfe eines Mittelwerts über eine zeitliche Abfolge der Beschleunigungswerte A bestimmt werden.

Alternativ kann der Indikatorwert beispielsweise mithilfe eines Gleichanteils einer FFT-Transformation über eine zeitliche Abfolge der Beschleunigungswerte A bestimmt werden.

In einem ersten Anwendungsbeispiel der Erfindung kann bei Überschreiten eines vorbestimmten Grenzwerts für den im Schritt f) bestimmten Differenzvektor DV eine Korrektur des Lagevektors LV mithilfe des im Schritt f) bestimmten Differenzvektors DV durchgeführt werden.

In einem weiteren Anwendungsbeispiel der Erfindung kann bei Überschreiten eines vorbestimmten Grenzwerts für den der im Schritt f) bestimmten Differenzvektor DV ein Sensorwechsel vom ersten Beschleunigungssensor S1 zum Ersatz-Beschleunigungssensor ES erkannt werden.

In einem anderen Anwendungsbeispiel der Erfindung kann der euklidische Abstand für den im Schritt f) bestimmten Differenzvektor DV über zumindest einen Zeitpunkt gebildet wird, und eine Betriebszustandsanalyse des Objekts TO durch Anwendung des mathematischen Modells MLM und des euklidischen Abstands des Differenzvektors DV durchgeführt werden.

In einem weiteren Anwendungsbeispiel der Erfindung kann der Differenzvektor DV über einen zeitlichen Verlauf wiederholt bestimmt werden.

Dabei kann optional ein Mittelwert über den zeitlichen Verlauf des Differenzvektors DV berechnet werden.

In einem anderen Anwendungsbeispiel der Erfindung kann ein mathematisches Modell MLM auf Basis von maschinellem Lernen für das Objekt TO mithilfe des im Schritt f) bestimmten Differenzvektors DV erzeugt, trainiert und angewendet werden, und der Betrieb des Objekts TO mithilfe des Modells (MLM) überwacht werden.

Zusätzlich zu den vorhergehenden beiden Anwendungsbeispielen kann beispielsweise das mathematische Modell MLM mithilfe des zeitlichen Verlaufs des Differenzvektors DV erzeugt, trainiert und angewendet werden.

Es ist günstig, wenn der erste Beschleunigungssensor S1 und der Ersatz-Beschleunigungssensor EV baugleich sind, da das Modell MLM für das technische Objekt TO dadurch einfacher ist.

Ferner ist es günstig, wenn sich das Objekt TO während Schritt d) im Betrieb befindet, da dadurch gegebenenfalls eine unerwünschte Betriebs-Stillstands-Zeit des Objekts reduzieren lässt und die Verfügbarkeit des Objekts daher verbessern lässt.

Unter dem Anwenden des Modells MLM beim Betrieb BTO des Objekts TO kann beispielsweise die Prognostizierung von Betriebseigenschaften des technischen Objekts TO in Form einer Betriebsüberwachung verstanden werden. Dabei kann künstliche Intelligenz angewandt werden und eine Klassifizierung von Sensorwerten des Beschleunigungssensors erfolgen, und eine Ähnlichkeit zu trainierten Klassen ermittelt werden.

Es ist klar, dass auch mehrere Beschleunigungssensoren an verschiedenen Positionen eingesetzt werden können, die in das Modell MLM einfließen und diese Sensoren vom erfindungsgemäßen Verfahren erfasst werden.

Es ist auch klar, dass das Modell MLM auch zumindest einen weiteren Sensor inkludieren kann, welcher jedoch kein Beschleunigungssensor, sondern beispielsweise ein Temperatursensor ist. Ein derartiger Sensor kann jedoch nicht vom erfindungsgemäßen Verfahren erfasst werden, da keine Orientierung des technischen Objekts beziehungsweise des Sensors relativ zur Erd-Gravitation erkannt werden kann.

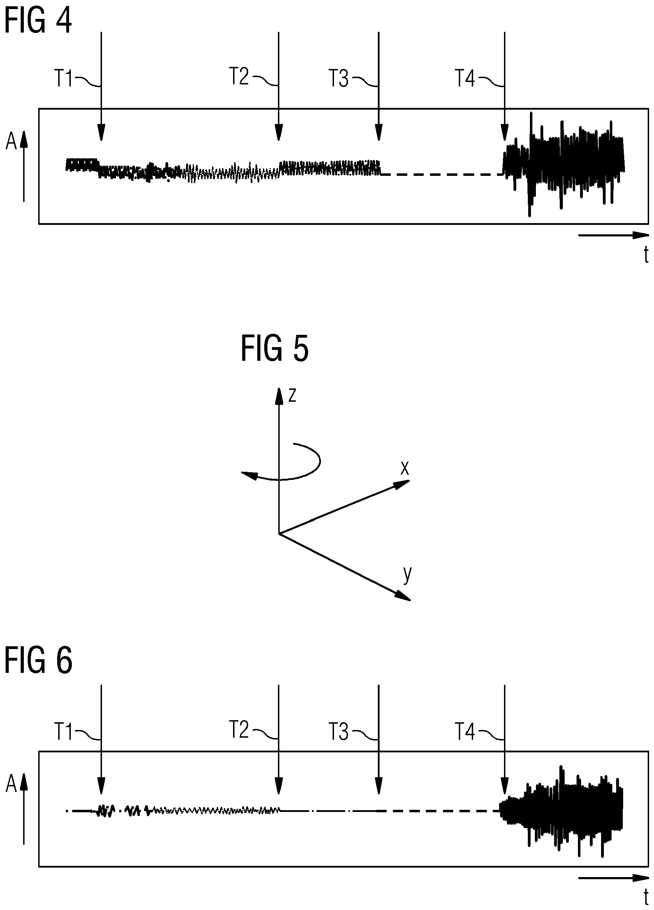

**Fig. 4** stellt ein Beispiel für eine zeitliche Darstellung eines Sensorsignals A, eine Achse des dreiachsigen Beschleunigungssensors über eine Zeitachse t nach Sensor-Neumontagen mit den Zeitpunkten T1-T4 ohne jeweilige Neuausrichtung des Koordinatensystems der Sensororientierung OES dar.

Das Sensorsignal weist ein Sensordaten-Tripel (x, y, z) aus den Einzelsensoren des dreiachsigen Beschleunigungssensors auf. Die Einzelsensoren repräsentieren jeweils eine Achse des dreiachsigen Beschleunigungssensors.

Unter der Neuausrichtung des Koordinatensystems wird im vorliegenden Zusammenhang jenes Verfahren verstanden, in welchem eine Neuausrichtung des Lagevektors LV gegenüber dem Gravitationsvektor erfolgt, also eine Durchführung der Verfahrensschritte d) bis f). Der Gravitationsvektor liegt in der Richtung der Gravitationskraft der Erdgravitation.

Es ist in der gezeigten Kurve erkennbar, dass erfasste Sensordaten ungünstig für eine nachfolgende Anwendung eines ML-Modells MLM sein können.

Das Modell MLM basiert auf dem Sensors S1 mit einer Orientierung OS1, welcher jedoch durch den Ersatz-Sensor ES mit einer neuen Orientierung OES ersetzt wurde, wobei die Orientierung OS1 nicht der Orientierung OES entspricht.

**Fig. 5** zeigt eine Darstellung einer Veränderung der SensorOrientierung um die z-Achse nach einer Sensor-Neumontage, wie sie durch mechanische Toleranzen durch die mechanische Befestigung des Sensors auftreten kann.

Beispielsweise können große Befestigungsöffnungen in Kombination mit zu dünnen Befestigungsschrauben eine verdrehte Montage ermöglichen.

Beispielsweise fällt die Orientierung, das heißt die Drehlage des SITRANS MS200 Sensors als Ersatz-Sensors ES, bei welchem das Gewinde Bestandteil des Gehäuses ist, nach einer erneuten korrekten Befestigung nicht notwendigerweise mit jener Orientierung bei der Erstmontage des ersten Beschleunigungssensors S1 zusammen.

**Fig. 6** zeigt ein Beispiel für ein zeitliche Darstellung eines Sensorsignals nach Sensor-Neumontage nach einer erfindungsgemäßen Neuausrichtung des Koordinatensystems, das heißt Korrektur des Lagevektors LV.

Es ist die "Neuausrichtung des Koordinatensystems" durch Korrektur des Lagevektors des Sensors im Sensorsignal A erkennbar, sowie die damit einhergehende Verbesserung der entsprechenden Sensordaten, insbesondere an den Zeitpunkten T1 bis T4, an welchen ein Sensorwechsel durchgeführt wurde.

Die Neuausrichtung des Koordinatensystems bezeichnet eine Korrektur des Lagevektors des Sensors nach den Verfahrensschritten d) bis f), welche dazu führt, kein erneutes Trainieren des ML-Modells MLM für das technische Objekt TO erforderlich ist.

**Bezugszeichenliste:**

| A | Sensorwert in x-, y-, z-Richtung für die Beschleunigung |
|---|---|
| BTO | Betrieb technisches Objekt |
| DV | Differenzvektor |
| LV | Lagevektor |
| MLM | ML-Modell |
| OS1, OES | Orientierung des Ersatz-Sensors in Einbaulage |
| RV | Rechenvorrichtung mit Speicher |
| S1, ES | dreiachsiger Beschleunigungs-Sensor |
| t | Zeitachse |
| T1-T4 | Zeitpunkte für Montage von Sensorersatz; Sensorwechsel |
| TO | technisches Objekt, z.B. Motor oder Pumpe |
| V | Vorrichtung |

**Patentansprüche**

1. Verfahren zum Überwachen des Betriebs eines technischen Objekts (TO) mithilfe eines mathematischen Modells (MLM) auf Basis maschinellen Lernens nach der Montage eines dreiachsigen Ersatz-Beschleunigungssensors (ES), wobei zunächst ein dreiachsiger erster Beschleunigungssensor (S1) auf dem Objekt (TO) an einer Position montiert ist, und das Objekt (TO) im Betrieb mechanische Schwingungen erzeugt, und folgende Schritte ausgeführt werden:

   a) Ermitteln einer ersten Orientierung (OS1) des ersten Beschleunigungssensors am Objekt (TO) in Form eines Lagevektors (LV) relativ zur Gravitationskraft,
   b) Erzeugen und Trainieren des mathematischen Modells (MLM) zur Überwachung des Objekts (TO) bezüglich des Lagevektors (LV),
   c) Demontage des ersten Beschleunigungssensors (S1) und Montage des dreiachsigen Ersatz-Beschleunigungssensors (ES) mit einer neuen Orientierung (OES) am Objekt (TO) an derselben Position, an jener der erste Beschleunigungssensors (S1) montiert war,

**gekennzeichnet durch** folgende zusätzliche Schritte:

d) Erfassen von Beschleunigungswerten (A) in x-, y- und z-Richtung mithilfe jeweiliger Einzelsensoren des dreiachsigen Ersatz-Beschleunigungssensors (ES) des Objekts (TO),

e) Berechnen jeweiliger Indikatorwerte aus dem zeitlichen Verlauf der erfassten Beschleunigungswerte (A) des Ersatz-Beschleunigungssensors (ES),

f) Bestimmen eines Ersatz-Vektors aus den Indikatorwerten und Bestimmen eines Differenzvektors (DV) zwischen dem Ersatz-Vektor und dem in Schritt b) ermittelten Lagevektor (LV) des ersten Beschleunigungssensors (S1),

g) Überwachen des Betriebs des Objekts durch Anwenden des Modells (MLM) beim Betrieb (BTO) des Objekts (TO) für den Lagevektor (LV) in der Orientierung des Ersatz-Vektors unter Berücksichtigung des Differenzvektors (DV).

2. Verfahren nach Anspruch 1, wobei der Indikatorwert mithilfe eines Mittelwerts über eine zeitliche Abfolge der Beschleunigungswerte (A) bestimmt wird.

3. Verfahren nach Anspruch 1, wobei der Indikatorwert mithilfe eines Gleichanteils einer FFT-Transformation über eine zeitliche Abfolge der Beschleunigungswerte (A) bestimmt wird.

4. Verfahren nach einem der vorhergehenden Ansprüche, wobei bei Überschreiten eines vorbestimmten Grenzwerts für den im Schritt f) bestimmten Differenzvektor (DV) eine Korrektur des Lagevektors (LV) mithilfe des im Schritt f) bestimmten Differenzvektors (DV) durchgeführt wird.

5. Verfahren nach einem der vorhergehenden Ansprüche, wobei bei Überschreiten eines vorbestimmten Grenzwerts für den der im Schritt f) bestimmten Differenzvektor (DV) ein Sensorwechsel vom ersten Beschleunigungssensor (S1) zum Ersatz-Beschleunigungssensor (ES) erkannt wird.

6. Verfahren nach einem der vorhergehenden Ansprüche, wobei der euklidische Abstand für den im Schritt f) bestimmten Differenzvektor (DV) über zumindest einen Zeitpunkt gebildet wird, und eine Betriebszustandsanalyse des Objekts (TO) durch Anwendung des mathematischen Modells (MLM) und des euklidischen Abstands des Differenzvektors (DV) durchgeführt wird.

7. Verfahren nach einem der vorhergehenden Ansprüche, wobei der Differenzvektor (DV) über einen zeitlichen Verlauf wiederholt bestimmt wird und vorzugweise ein Mittelwert über den zeitlichen Verlauf des Differenzvektors (DV) berechnet wird.

8. Verfahren nach einem der vorhergehenden Ansprüche, wobei das mathematisches Modell (MLM) auf Basis von maschinellem Lernen für das Objekt (TO) mithilfe des im Schritt f) bestimmten Differenzvektors (DV) erzeugt, trainiert und angewendet wird.

9. Verfahren nach einem der Ansprüche 7 und 8, wobei das mathematische Modell (MLM) mithilfe des zeitlichen Verlaufs des Differenzvektors (DV) erzeugt, trainiert und angewendet wird.

10. Verfahren nach einem der vorhergehenden Ansprüche, wobei der erste Beschleunigungssensor (S1) und der Ersatz-Beschleunigungssensor (EV) baugleich sind.

11. Verfahren nach einem der vorhergehenden Ansprüche, wobei sich das Objekt (TO) während Schritt d) im Betrieb befindet.

12. Computerprogramm, umfassend Befehle, welche bei deren Ausführung durch einen Computer diesen veranlassen, die Schritte d) bis g) des Verfahrens nach einem der vorhergehenden Ansprüche auszuführen.

13. Elektronisch lesbarer Datenträger mit darauf gespeicherten lesbaren Steuerinformationen, welche zumindest ein Computerprogramm nach dem vorhergehenden Anspruch umfassen und derart ausgestaltet sind, dass sie bei Verwendung des Datenträgers in einer Recheneinrichtung die Schritte d)-g)eines Verfahrens nach einem der Ansprüche 1 bis 11 durchführen.

14. Vorrichtung (V) zum Überwachen des Betriebs eines technischen Objekts (TO), umfassend eine Rechenvorrichtung (RV) mit einem Speicher, sowie verbundene Erfassungsmittel zur Erfassung von Sensorwerten in Form eines dreiachsigen Beschleunigungssensors (S1, ES), wobei die Rechenvorrichtung (RV) dazu eingerichtet ist, ein mathematisches Modell (MLM) auf Basis maschinellen Lernens zu erzeugen, zu trainieren und zu speichern, und auf dem Objekt (TO) der dreiachsige Beschleunigungssensor (S1, ES) an einer Position montiert ist, und das Objekt (TO) im Betrieb mechanische Schwingungen erzeugt, **dadurch gekennzeichnet, dass** die Rechenvorrichtung (RV) dazu eingerichtet ist, mithilfe durch das Erfassungsmittel erfasster Sensorwerte das Verfahren nach einem der Ansprüche 1 bis 11 auszuführen.

## Claims

1. Method for monitoring the operation of a technical object (TO) with the aid of a mathematical model (MLM) based on machine learning after assembly of a three-axle replacement acceleration sensor (ES), wherein a three-axle first acceleration sensor (S1) is initially assembled on the object (TO) at a position, and during operation the object (TO) generates mechanical oscillations, and the following steps are carried out:

   a) Determining a first orientation (OS1) of the first acceleration sensor on the object (TO) in the form of a position vector (LV) relative to the gravitational force,
   b) Generating and training the mathematical model (MLM) for monitoring the object (TO) with respect to the position vector (LV),
   c) Disassembly of the first acceleration sensor (S1) and assembly of the three-axle replacement acceleration sensor (ES) with a new orientation (OES) on the object (TO) at the same position, at which the first acceleration sensor (S1) was assembled,
   **characterised by** the following additional steps:
   d) Detecting acceleration values (A) in the x-, y- and z-direction with the aid of respective individual sensors of the three-axle replacement acceleration sensor (ES) of the object (TO),
   e) Calculating respective indicator values from the temporal course of the detected acceleration values (A) of the replacement acceleration sensor (ES)
   f) Determining a replacement vector from the indicator values and determining a differential vector (DV) between the replacement vector and the position vector (LV) of the first acceleration sensor (S1) determined in step b),
   g) Monitoring the operation of the object by applying the model (MLM) during operation (BTO) of the object (TO) for the position vector (LV) in the orientation of the replacement vector by taking into account the differential vector (DV).

2. Method according to claim 1, wherein the indicator value is determined with the aid of an average value over a temporal sequence of acceleration values (A).

3. Method according to claim 1, wherein the indicator value is determined with the aid of a steady component of an FFT transform over a temporal sequence of acceleration values (A).

4. Method according to one of the preceding claims, wherein if a predetermined limit value is exceeded for the differential vector (DV) determined in step f), a correction of the position vector (LV) is carried out with the aid of the differential vector (DV) determined in step f).

5. Method according to one of the preceding claims, wherein if a predetermined limit value is exceeded for the differential vector (DV) determined in step f), a sensor change from the first acceleration sensor (S1) to the replacement acceleration sensor (ES) is identified.

6. Method according to one of the preceding claims, wherein the Euclidean distance for the differential vector (DV) determined in step f) is formed over at least one point in time, and an operating state analysis of the object (TO) is carried out by applying the mathematical model (MLM) and the Euclidean distance of the differential vector (DV).

7. Method according to one of the preceding claims, wherein the differential vector (DV) is determined repeatedly over a temporal course and an average value is preferably calculated over the temporal course of the differential vector (DV).

8. Method according to one of the preceding claims, wherein the mathematic model (MLM) is generated, trained and applied on the basis of machine learning for the object (TO) with the aid of the differential vector (DV) determined in step f).

9. Method according to one of claims 7 and 8, wherein the mathematical model (MLM) is generated, trained and applied with the aid of the temporal course of the differential vector (DV) .

10. Method according to one of the preceding claims, wherein the first acceleration sensor (S1) and the replacement acceleration sensor (EV) are identical in construction.

11. Method according to one of the preceding claims, wherein during step d) the object (TO) is in operation.

12. Computer program, comprising commands, which with its execution by a computer, trigger this to execute the steps d) to g) of the method according to one of the preceding claims.

13. Electronically readable data carrier with readable control information stored thereupon, which comprise at least one computer program according to the preceding claim and are designed so that they carry out the steps d) - g) of a method according to one of claims 1 to 11 when the data carrier is used in a computing facility.

14. Apparatus (V) for monitoring the operation of a technical object (TO), comprising a computing apparatus (RV) with a memory, and connected detection means for detecting sensor values in the form of a three-axle acceleration sensor (S1, ES), wherein the computing apparatus (RV) is designed to generate, train and store a mathematical model (MLM) on the basis of machine learning, and on which object (TO) the three-axle acceleration sensor (S1, ES) is assembled at a position, and during operation the object (TO) generates mechanical oscillations, **characterised in that** the computing apparatus (RV) is designed to execute the method according to one of claims 1 to 11 with the aid of sensor values detected by the detection means.

**Revendications**

1. Procédé de surveillance du fonctionnement d'un objet technique (TO) à l'aide d'un modèle mathématique (MLM) sur la base de l'apprentissage automatique après le montage d'un capteur d'accélération de remplacement triaxial (ES), dans lequel un premier capteur d'accélération triaxial (S1) est d'abord monté sur l'objet (TO) à une position, et l'objet (TO) produit en fonctionnement des vibrations mécaniques, et les étapes suivantes sont exécutées :

   a) détermination d'une première orientation (OS1) du premier capteur d'accélération sur l'objet (TO) sous forme d'un vecteur de position (LV) par rapport à la force de gravitation,
   b) production et entraînement du modèle mathématique (MLM) pour la surveillance de l'objet (TO) par rapport au vecteur de position (LV,)
   c) démontage du premier capteur d'accélération (S1) et montage du capteur d'accélération de remplacement triaxial (ES) avec une nouvelle orientation (OES) sur l'objet (TO) à la même position que celle sur laquelle le premier capteur d'accélération (S1) était monté,
   **caractérisé par** les étapes supplémentaires suivantes :
   d) saisie de valeurs d'accélération (A) dans la direction x, y et z à l'aide des capteurs individuels respectifs du capteur d'accélération de remplacement triaxial (ES) de l'objet (TO),
   e) calcul des valeurs indicatrices respectives à partir de la variation dans le temps des valeurs d'accélération saisies (A) du capteur d'accélération de remplacement (ES),
   f) détermination d'un vecteur de remplacement à partir des valeurs indicatrices et détermination d'un vecteur de différence (DV) entre le vecteur de remplacement et le vecteur de position (LV), déterminé à l'étape b), du premier capteur d'accélération (S1),
   g) surveillance du fonctionnement de l'objet par application du modèle (MLM) lors du fonctionnement (BTO) de l'objet (TO) pour le vecteur de position (LV) dans l'orientation du vecteur de remplacement en tenant compte du vecteur de différence (DV).

2. Procédé selon la revendication 1, dans lequel la valeur indicatrice est déterminée à l'aide d'une valeur moyenne sur une succession temporelle des valeurs d'accélération (A).

3. Procédé selon la revendication 1, dans lequel la valeur indicatrice est déterminée à l'aide d'une composante continue d'une transformée de Fourier FFT sur une succession temporelle des valeurs d'accélération (A).

**4.** Procédé selon l'une des revendications précédentes, dans lequel lors du dépassement d'une valeur limite prédéterminée pour le vecteur de différence (DV) déterminé à l'étape f), une correction du vecteur de position (LV) est effectuée à l'aide du vecteur de différence (DV) déterminé à l'étape f).

**5.** Procédé selon l'une des revendications précédentes, dans lequel lors du dépassement d'une valeur limite prédéterminée pour le vecteur de différence (DV) déterminé à l'étape f), un changement de capteur du premier capteur d'accélération (S1) au capteur d'accélération de remplacement (ES) est reconnu.

**6.** Procédé selon l'une des revendications précédentes, dans lequel la distance euclidienne pour le vecteur de différence (DV) déterminé à l'étape f) est formée par au moins un moment, et une analyse de l'état de fonctionnement de l'objet (TO) est réalisée par application du modèle mathématique (MLM) et de la distance euclidienne du vecteur de différence (DV).

**7.** Procédé selon l'une des revendications précédentes, dans lequel le vecteur de différence (DV) est déterminé à plusieurs reprises sur une variation dans le temps et, de préférence, une valeur moyenne est calculée sur la variation dans le temps du vecteur de différence (DV).

**8.** Procédé selon l'une des revendications précédentes, dans lequel le modèle mathématique (MLM) est produit, entraîné et appliqué sur la base de l'apprentissage automatique pour l'objet (TO) à l'aide du vecteur de différence (DV) déterminé à l'étape f) .

**9.** Procédé selon l'une des revendications 7 et 8, dans lequel le modèle mathématique (MLM) est produit, entraîné et appliqué à l'aide de la variation dans le temps du vecteur de différence (DV) .

**10.** Procédé selon l'une des revendications précédentes, dans lequel le premier capteur d'accélération (S1) et le capteur d'accélération de remplacement (EV) sont de construction identique.

**11.** Procédé selon l'une des revendications précédentes, dans lequel l'objet (TO) se trouve en fonctionnement pendant l'étape d) .

**12.** Programme informatique, comprenant des instructions, lesquelles lors de leur exécution par un ordinateur ordonnent à celui-ci d'exécuter les étapes d) à g) du procédé selon l'une des revendications précédentes.

**13.** Support de données lisible électroniquement comportant des informations de commande lisibles enregistrées dessus, lesquelles comprennent au moins un programme informatique selon la revendication précédente et sont configurées de telle sorte que, lors de l'utilisation du support de données dans un dispositif de calcul, elles exécutent les étapes d)-g) d'un procédé selon l'une des revendications 1 à 11.

**14.** Dispositif (V) de surveillance du fonctionnement d'un objet technique (TO), comprenant un dispositif de calcul (RV) avec une mémoire, ainsi que des moyens de saisie liés pour saisir des valeurs de capteur sous forme d'un capteur d'accélération triaxial (S1, ES), dans lequel le dispositif de calcul (RV) est conçu pour produire, entraîner et enregistrer un modèle mathématique (MLM) sur la base de l'apprentissage automatique, et sur l'objet (TO) est monté le capteur d'accélération triaxial (S1, ES) à une position, et l'objet (TO) produit en fonctionnement des vibrations mécaniques, **caractérisé en ce que** le dispositif de calcul (RV) est conçu pour exécuter le procédé selon l'une des revendications 1 à 11 à l'aide des valeurs de capteur saisies par le moyen de saisie.

FIG 1

FIG 2

# FIG 3

FIG 4

T1 T2 T3 T4

A

t

FIG 5

z

x

y

FIG 6

T1 T2 T3 T4

A

t

**IN DER BESCHREIBUNG AUFGEFÜHRTE DOKUMENTE**

**In der Beschreibung aufgeführte Patentdokumente**

- US 2009056456 A
- US 2020272139 A
- DE 102015115282
- DE 102009045493